# EUROPEAN PATENT APPLICATION

(11) **EP 4 582 777 A1**
(43) Date of publication of application: **09.07.2025**
(21) Application number: 23813545.3
(22) Date of filing: 28.08.2023
(51) Int. Cl.: G01D 11/30

(54) **PHOTOELECTRIC DETECTION MECHANISM WITH CLEANING FUNCTION**

(30) Priority: 29.08.2022 CN 202211043599
(71) Applicant: Jiangsu Botao Intelligent Thermal Engineering Co., Ltd., Suzhou, Jiangsu 215500 (CN)
(72) Inventor: MAO, Xijia, Suzhou, Jiangsu 215500 (CN); LV, Zhangzhong, Suzhou, Jiangsu 215500 (CN); HUO, Lijun, Suzhou, Jiangsu 215500 (CN); ZHAI, Guoping, Suzhou, Jiangsu 215500 (CN); SHI, Wei, Suzhou, Jiangsu 215500 (CN)
(74) Representative: RGTH
(86) International application number: PCT/CN2023/115194
(87) International publication number: WO 2024/046256

(57) **Abstract**

The present invention relates to the field of photoelectric detection equipment technologies, and provides a photoelectric detection mechanism with a cleaning function, including a sliding seat and a photoelectric detection device disposed on the top end of the sliding seat. The photoelectric detection device is fixedly disposed on the top end of the sliding seat by a connection assembly. A screw rod is threadedly inserted to the sliding seat. A substrate is rotatably disposed on each of two ends of the screw rod. A fixing plate is disposed at the bottom of the sliding seat between the two substrates. Two ends of the fixing plate are fixedly connected to the two substrates respectively. In the present invention, the connection assembly can facilitate the assembly and disassembly of the photoelectric detection device and the sliding seat, to facilitate the maintenance of the photoelectric detection device. The drive assembly can move a cleaning assembly, to avoid affecting the normal operation of the photoelectric detection device when cleaning is not required. The cleaning assembly can clean the outside of a photoelectric sensor on the photoelectric detection device, to reduce a possibility that dust accumulates to affect the normal operation of the photoelectric detection device.

## Description

### FIELD OF THE INVENTION

The present invention relates to the field of photoelectric detection, and more specifically to a photoelectric detection mechanism with a cleaning function.

### DESCRIPTION OF THE RELATED ART

During the packaging of a packaging box, a logo needs to be bonded at a specified position on a top surface before subsequent transportation. Manual detection is further required after the logo is bonded. The manual detection is complex, inefficient, and ineffective. Therefore, a photoelectric detection device is usually used to perform detection nowadays, and has advantages such as high efficiency and convenience.

An existing photoelectric detection mechanism for performing detection on a packaging box still has certain deficiencies during actual use. For example, it is inconvenient to assemble and disassemble the photoelectric detection device, and as a result it is inconvenient to maintain the photoelectric detection device. In addition, some dust accumulates on the surface of a photoelectric sensor on the photoelectric detection device after a long time, and may affect the normal detection operation of the photoelectric sensor.

### SUMMARY OF THE INVENTION

To overcome the deficiencies in the prior art, a technical problem to be resolved by the present invention is to provide a photoelectric detection mechanism with a cleaning function, which can clean dust on the surface of a photoelectric detection device.

To achieve the objective, the following technical solutions are used in the present invention:
The present invention provides a photoelectric detection mechanism with a cleaning function, comprising a sliding seat and a photoelectric detection device, wherein the photoelectric detection device being disposed on a top end of the sliding seat. The photoelectric detection device is fixedly disposed on the top end of the sliding seat through a connection assembly. A screw rod is threadedly inserted to the sliding seat. A substrate is rotatably disposed on each of two ends of the screw rod. A fixing plate is disposed at a bottom of the sliding seat between the two substrates. Two ends of the fixing plate are fixedly connected to the two substrates respectively. A U-shaped mounting seat is disposed at a bottom of the fixing plate. A top end of the mounting seat is fixedly connected to the sliding seat. A cleaning assembly for cleaning the photoelectric detection device is disposed at a side of the mounting seat. A drive assembly for driving the cleaning assembly is disposed inside the mounting seat. By means of the rotation of the screw rod, the sliding seat can be driven to move. The movement of the sliding seat can implement the adjustment of the position of the photoelectric detection device. The connection assembly can facilitate the assembly and disassembly of the photoelectric detection device and the sliding seat, to facilitate the maintenance of the photoelectric detection device. The drive assembly can move the cleaning assembly, to avoid affecting the normal operation of the photoelectric detection device when cleaning is not required. The cleaning assembly can clean the outside of the photoelectric sensor on the photoelectric detection device, to reduce a possibility that dust accumulates to affect the normal operation of the photoelectric detection device.

In a preferred embodiment of the present invention, a sliding groove is opened on a bottom end of the sliding seat, the sliding seat is slidably disposed on a top of the fixing plate by fitting the sliding groove, a limit groove is opened on each of two sides of the fixing plate, a limit block is slidably disposed inside each of the two limit grooves, and the two limit blocks are respectively fixed at two sides of the sliding groove. The sliding seat can slide on the top end of the fixing plate by means of the fitting of the sliding groove with the the fixing plate, and the limited connection between the sliding seat and the fixing plate can be achieved by fitting of the limit blocks with the limit grooves.

In a preferred embodiment of the present invention, the connection assembly comprises an inverted T-shaped limit seat and an insertion post, the limit seat is fixedly disposed at a bottom end of the photoelectric detection device, the limit seat is fittingly limited in a seat groove opened on the top end of the sliding seat, the insertion post is fixedly disposed on a back side of the photoelectric detection device, an end of the insertion post extends through the sliding seat to be fittingly sleeved with a fixing block, the fixing block is fixedly connected to the sliding seat, and insertion structures for inserting to the insertion post are disposed opposite on two sides of the fixing block. The fitting between the limit seat and the seat groove can position the photoelectric detection device on the sliding seat. The insertion structure can insert to the insertion post, to implement the fixation of the photoelectric detection device by insertion.

In a preferred embodiment of the present invention, the insertion structure comprises a movable pressing plate, a support spring is fixedly disposed on one side of a bottom end of the movable pressing plate, a bottom end of the support spring is fixedly connected to the fixing block, an insertion block is disposed on the other side of the bottom end of the movable pressing plate, a top end of the insertion block is rotatably connected to the movable pressing plate by a hinge block, and a bottom end of the insertion block is fittingly inserted into an insertion groove opened on the insertion post. The support spring can support the movable pressing plate. The fitting of the insertion blocks with the insertion grooves can implement the fixation of the insertion post by insertion. The insertion blocks are rotatably connected to the movable pressing plate. When the movable pressing plate is pressed, the movement of the insertion block is kept from being hindered.

In a preferred embodiment of the present invention, a slope tilting downward is disposed on a side, close to the insertion post, of each of the two insertion blocks, a tilting chamfer is disposed at an end of the insertion post corresponding to the slope, a mounting groove is opened on the fixing block, a spring block is disposed in the mounting groove, the spring block is located on a side of the insertion post, a supporting rod is disposed on a middle portion of the bottom end of the movable pressing plate, a bottom end of the supporting rod is fixedly connected to the fixing block, and a top end of the supporting rod is rotatably connected to the movable pressing plate by the hinge block. Through the fitting of the chamfer and the slope, when the insertion post is inserted to the fixing block, the two insertion blocks can be pushed to move towards two sides. When the insertion blocks move to contact the insertion grooves, under the elastic action of the support spring, the insertion blocks and the insertion grooves are pushed for insertion and fixation, and the supporting rod can improve the stability of the position of the movable pressing plate.

In a preferred embodiment of the present invention, the cleaning assembly comprises a base, an electric push rod is disposed on each of two sides of a bottom end of the base, output ends of the two electric push rods extend through the base to be fixedly connected to a same movable seat, a sliding chamber and a dust suction chamber are respectively opened at a top and a bottom of an inner cavity of the movable seat, and a cleaning structure and a dust suction structure are respectively disposed inside the sliding chamber and the dust suction chamber. The electric push rod operates to push the movable seat to move. The electric push rod reciprocates to drive the movable seat to move back and forth in a vertical direction. The movable seat moves to drive the motion of the cleaning structure. The cleaning structure can clean dust outside the photoelectric detection device.

In a preferred embodiment of the present invention, the cleaning structure comprises a sliding table, a clamping groove is opened on a side of the sliding table, a brush seat is fittingly clamped inside the clamping groove, the brush seat is attracted inside the clamping groove by a rubber magnetic stripe disposed on a side of the brush seat (807), a cleaning brush is disposed on a side of the brush seat, an end of the cleaning brush extends through the sliding chamber to be located outside the sliding chamber, a threaded sleeve is fixedly disposed on a middle portion of a back side of the sliding table, an adjustment screw is threadedly connected in the threaded sleeve, and an end of the adjustment screw threadedly extends through the movable seat to be located outside the movable seat. The rubber magnetic stripe fixes the brush seat inside the sliding table, and can facilitate the disassembly of the brush seat, making it convenient to clean and replace the cleaning brush. When the adjustment screw is turned, the threaded sleeve threadedly connected to the adjustment screw can be driven to move. The threaded sleeve moves to push the sliding table to move, and the position of the cleaning brush can be adjusted, to enable the cleaning brush to contact the photoelectric detection device.

In a preferred embodiment of the present invention, the dust suction structure comprises two suction fans, the two suction fans are respectively disposed in inner walls at two sides of the movable seat, a dust screen is disposed at an air inlet of each suction fan, an opening is opened on a top of a side of the dust suction chamber away from the suction fan, a drawer box is disposed at a bottom of the suction fan inside the dust suction chamber, and an end of the drawer box extends through the dust suction chamber to be located outside the dust suction chamber. The suction fan operates to suck dust and foreign matter into the dust suction chamber along the opening, and then the dust and foreign matter fall in the drawer box to be collected. The dust screen can keep dust from entering the suction fan.

In a preferred embodiment of the present invention, the drive assembly comprises two movable frames, a sliding rod is fixedly disposed on each of two sides of each movable frame, the two sliding rods both slidably extend through the mounting seat to be located outside the mounting seat, one of the sliding rods is fixedly connected to the base, a connection plate is slidably connected to an outside of the sliding rod, an end of the connection plate is fixedly connected to an inner wall of the mounting seat, a rack is disposed on each of a top and a bottom of an inner side of the movable frame, a runner is disposed between the two racks, a half gear is disposed outside the runner, and the half gear is engaged with the racks. The half gear rotates half a revolution to drive one rack to move. In this case, the rack moves to drive the movable frame to move, and the movable frame moves to push the base to move, to move the base out from the bottom of the fixing plate. When continuing to rotate half a revolution, the half gear is engaged with the other rack and drives the rack to move in an opposite direction, so that the base can be moved to an original position.

In a preferred embodiment of the present invention, axial centers of the two runners are connected to a same rotating shaft, two ends of the rotating shaft are both rotatably connected to the mounting seat, a driven pulley is disposed in a middle portion of the rotating shaft, the driven pulley is connected to a driving pulley in a transmission way by a belt disposed outside the driven pulley, the driving pulley is located outside the mounting seat, and a drive motor for driving the driving pulley is disposed on the mounting seat. The drive motor operates to drive the driving pulley to rotate. The transmission of the belt can simultaneously drive the driven pulley to rotate. The driven pulley rotates to drive the rotating shaft to rotate. The rotating shaft rotates to drive the two half gears to simultaneously rotate.

The beneficial effects of the invention are as follows:
For the photoelectric detection mechanism with a cleaning function provided in the present invention: By means of the rotation of the screw rod, the sliding seat can be driven to move. The movement of the sliding seat can implement the adjustment of the position of the photoelectric detection device. The connection assembly can facilitate the assembly and disassembly of the photoelectric detection device and the sliding seat, to facilitate the maintenance of the photoelectric detection device. The drive assembly can move the cleaning assembly, to avoid affecting the normal operation of the photoelectric detection device when cleaning is not required. The cleaning assembly can clean the outside of the photoelectric sensor on the photoelectric detection device, to reduce a possibility that dust accumulates to affect the normal operation of the photoelectric detection device.

The support spring can support the movable pressing plate. The fitting of the insertion blocks with the insertion grooves can implement the fixation of the insertion post by insertion. The insertion blocks are rotatably connected to the movable pressing plate. When the movable pressing plate is pressed, the movement of the insertion block is kept from being hindered. Through the fitting of the chamfer and the slope, when the insertion post is inserted to the fixing block, the two insertion blocks can be pushed to move towards two sides. When the insertion blocks move to contact the insertion grooves, under the elastic action of the support spring, the insertion blocks and the insertion grooves are pushed for insertion and fixation.

The rubber magnetic stripe fixes the brush seat inside the sliding table, and can facilitate the disassembly of the brush seat, making it convenient to clean and replace the cleaning brush. When the adjustment screw is turned, the threaded sleeve threadedly connected to the adjustment screw can be driven to move. The threaded sleeve moves to push the sliding table to move, and the position of the cleaning brush can be adjusted, to enable the cleaning brush to contact the photoelectric detection device. The half gear rotates half a revolution to drive one rack to move. In this case, the rack moves to drive the movable frame to move, and the movable frame moves to push the base to move, to move the base out from the bottom of the fixing plate. When continuing to rotate half a revolution, the half gear is engaged with the other rack and drives the rack to move in an opposite direction, so that the base can be moved to an original position.

### BRIEF DESCRIPTION OF THE DRAWINGS

FIG. 1 is a schematic structural diagram of the connection between a sliding seat and a screw rod of a photoelectric detection mechanism with a cleaning function according to the present invention;
FIG. 2 is a schematic structural diagram of the connection between a sliding seat and a fixing plate of a photoelectric detection mechanism with a cleaning function according to the present invention;
FIG. 3 is a schematic structural diagram of a back side of a sliding seat of a photoelectric detection mechanism with a cleaning function according to the present invention;
FIG. 4 is a schematic structural diagram of a connection assembly of a photoelectric detection mechanism with a cleaning function according to the present invention;
FIG. 5 is a partial enlarged schematic diagram of a photoelectric detection mechanism with a cleaning function according to the present invention;
FIG. 6 is a schematic structural diagram of the connection between a cleaning assembly and a drive assembly of a photoelectric detection mechanism with a cleaning function according to the present invention;
FIG. 7 is a schematic structural diagram of a cleaning assembly of a photoelectric detection mechanism with a cleaning function according to the present invention;
FIG. 8 is a schematic structural diagram of the connection between a brush seat and a sliding table of a photoelectric detection mechanism with a cleaning function according to the present invention; and
FIG. 9 is a schematic structural diagram of a drive assembly of a photoelectric detection mechanism with a cleaning function according to the present invention.

In the drawings:
1-sliding seat; 2-photoelectric detection device; 3-connection assembly; 301-limit seat; 302-insertion post; 303-fixing block; 304-movable pressing plate; 305-support spring; 306-insertion block; 307-insertion groove; 308-slope; 309-chamfer; 3010-spring block; 3011-supporting rod; 4-screw rod; 5-substrate; 6-fixing plate; 7-mounting seat; 8-cleaning assembly; 801-base; 802-movable seat; 803-sliding chamber; 804-dust suction chamber; 805-sliding table; 806-clamping groove; 807-brush seat; 808-rubber magnetic stripe; 809-cleaning brush; 8010-threaded sleeve; 8011-adjustment screw; 8012-suction fan; 8013-dust screen; 8014-opening; 8015-drawer box; 8016-electric push rod; 9-drive assembly; 901-movable frame; 902-sliding rod; 903-connection plate; 904-rack; 905-runner; 906-half gear; 907-rotating shaft; 908-driven pulley; 909-belt; 9010-driving pulley; 9011-drive motor; 10-sliding groove; 11-limit groove; 12-limit block; and 13-seat groove.

### DETAILED DESCRIPTION OF THE PREFERRED EMBODIMENTS

The technical solutions of the present invention are further described between with reference to the accompanying drawings and the detailed description.

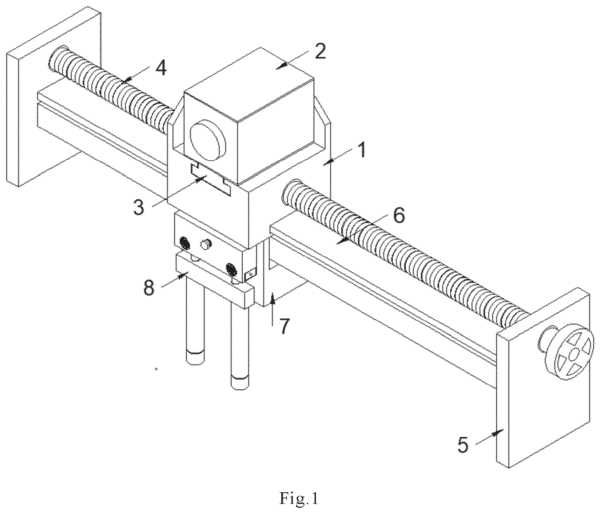

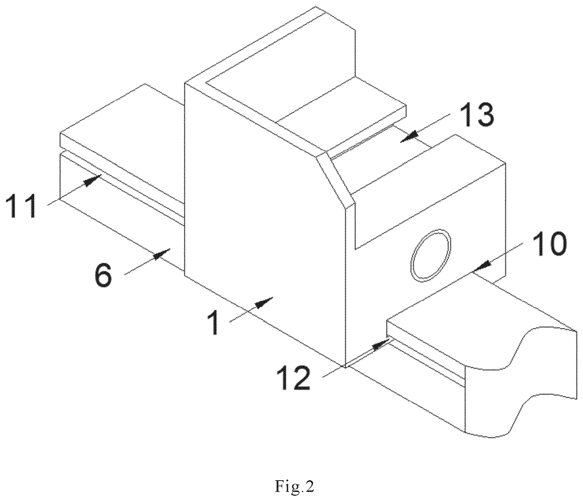

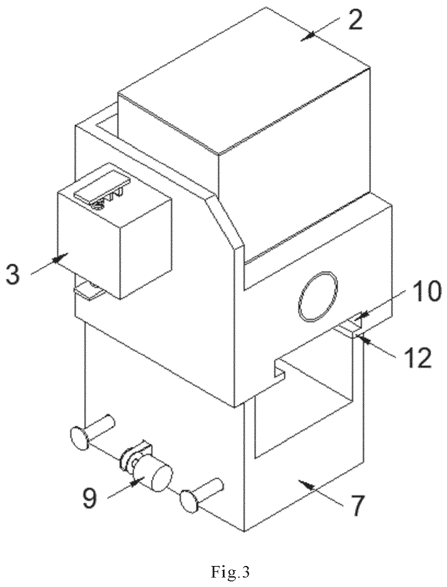

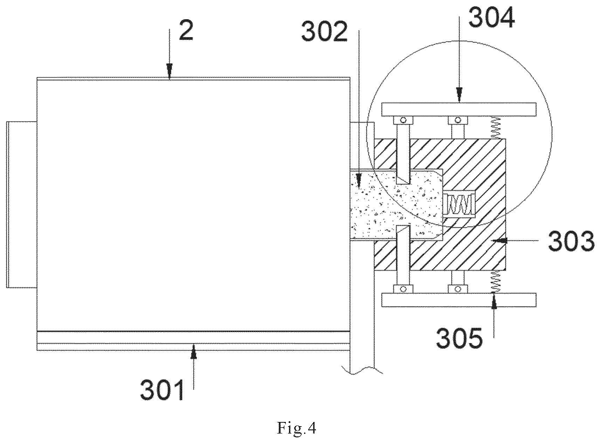

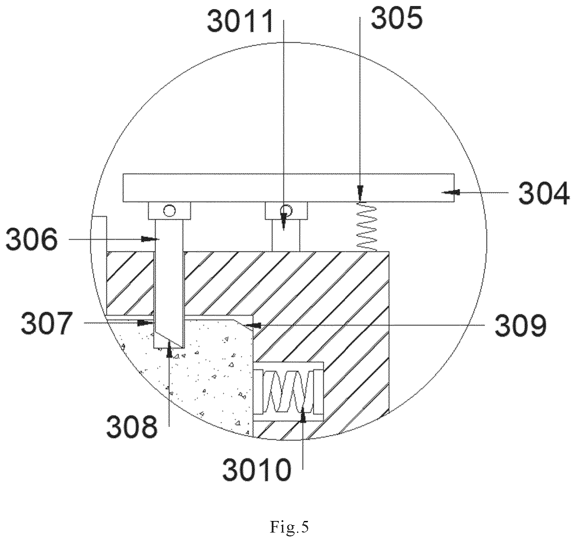

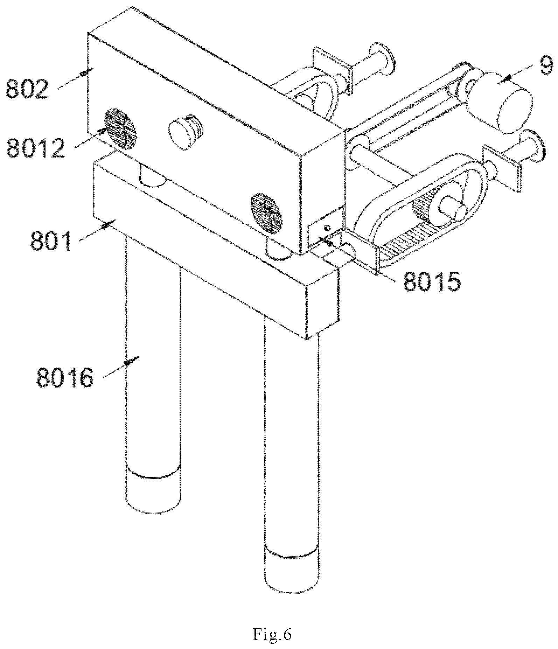

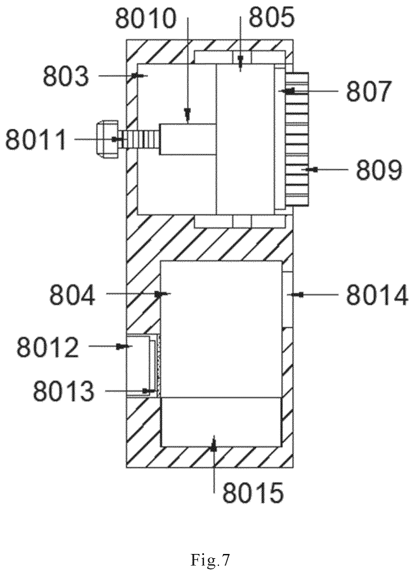

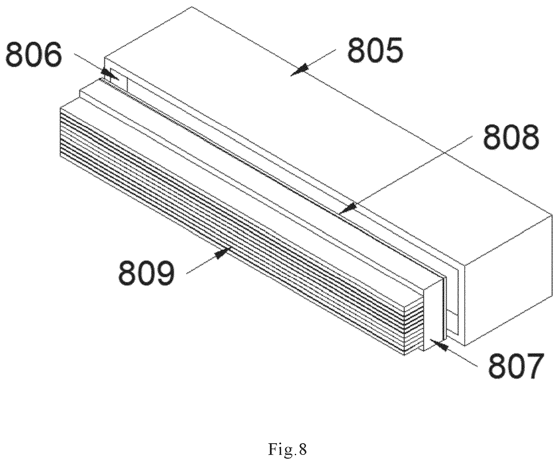

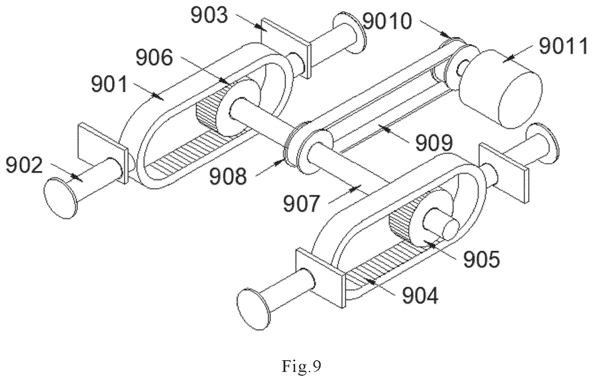

As shown in FIG. 1 to FIG. 9, an embodiment provides a photoelectric detection mechanism with a cleaning function, comprising a sliding seat 1 and a photoelectric detection device 2 disposed on the top end of the sliding seat 1. The photoelectric detection device 2 is fixedly disposed on the top end of the sliding seat 1 through a connection assembly 3. A screw rod 4 is threadedly inserted to the sliding seat 1. A substrate 5 is rotatably provided on each of two ends of the screw rod 4. A fixing plate 6 is disposed at the bottom of the sliding seat 1 between the two substrates 5. the two ends of the fixing plate 6 are fixedly connected to the two substrates 5 respectively. A U-shaped mounting seat 7 is disposed at the bottom of the fixing plate 6. The top end of the mounting seat 7 is fixedly connected to the sliding seat 1. A cleaning assembly 8 for cleaning the photoelectric detection device 2 is disposed on a side of the mounting seat 7. A drive assembly 9 for driving the cleaning assembly 8 is disposed inside the mounting seat 7.

### Embodiment 2

Referring to FIG. 1 to FIG. 9, a sliding groove 10 is opened on the bottom end of the sliding seat 1, the sliding seat 1 is slidably disposed on the top of the fixing plate 6 by the sliding groove 10, a limit groove 11 is opened on each of two sides of the fixing plate 6, a limit block 12 is slidably disposed inside each of the two limit grooves 11**,** and the two limit blocks 12 are respectively fixed at two sides of the sliding groove 10. The fitting of the sliding groove 10 with the fixing plate 6 can implement the sliding of the sliding seat 1 at the top end of the fixing plate 6, and the fitting of the limit blocks 12 with the limit grooves 11 can implement a limited connection between the sliding seat 1 and the fixing plate 6. The connection assembly 3 comprises an inverted T-shaped limit seat 301 and an insertion post 302. The limit seat 301 is fixedly disposed at the bottom end of the photoelectric detection device 2. The limit seat 301 is fittingly limited in a seat groove 13 opened on the top end of the sliding seat 1. The insertion post 302 is fixedly disposed on the back side of the photoelectric detection device 2. An end of the insertion post 302 extends through the sliding seat 1 to be fittingly sleeved with a fixing block 303. The fixing block 303 is fixedly connected to the sliding seat 1. Insertion structures for inserting to the insertion post 302 are disposed opposite on two sides of the fixing block 303. The fitting between the limit seat 301 and the seat groove 13 can position the photoelectric detection device 2 on the sliding seat 1. The insertion structure can insert to the insertion post 302, to implement the fixation of the photoelectric detection device 2. The insertion structure comprises a movable pressing plate 304. A support spring 305 is fixedly disposed on one side of the bottom end of the movable pressing plate 304. The bottom end of the support spring 305 is fixedly connected to the fixing block 303. An insertion block 306 is disposed on the other side of the bottom end of the movable pressing plate 304. The top end of the insertion block 306 is rotatably connected to the movable pressing plate 304 by a hinge block. The bottom end of the insertion block 306 is fittingly inserted to an insertion groove 307 opened on the insertion post 302. The support spring 305 can support the movable pressing plate 304. The fitting of the insertion blocks 306 with the insertion grooves 307 can implement the fixation of the insertion post 302. The insertion blocks 306 are rotatably connected to the movable pressing plate 304. When the movable pressing plate 304 is pressed, the movement of the insertion block 306 is kept from being hindered. A slope 308 tilting downward is provided on each of sides of two insertion blocks 306 close to the insertion post 302. A tilting chamfer 309 is provided on an end of the insertion post 302 corresponding to the slope 308. A mounting groove is opened on the fixing block 303. A spring block 3010 is disposed in the mounting groove. The spring block 3010 is located on a side of the insertion post 302. A supporting rod 3011 is disposed on a middle portion of the bottom end of the movable pressing plate 304. The bottom end of the supporting rod 3011 is fixedly connected to the fixing block 303. The top end of the supporting rod 3011 is rotatably connected to the movable pressing plate 304 by a hinge block. By the fitting of the chamfer 309 and the slope 308, when the insertion post 302 is inserted to the fixing block 303, the two insertion blocks 306 can be pushed to move towards two sides. When the insertion blocks 306 move to contact the insertion grooves 307, under the elastic action of the support spring 305, the insertion blocks 306 and the insertion grooves 307 are pushed for insertion and fixation, and the supporting rod 3011 can improve the stability of the position of the movable pressing plate 304.

### Embodiment 3

Referring to FIG. 1 to FIG. 9, the cleaning assembly 8 comprises a base 801. An electric push rod 8016 is disposed on each of two sides of the bottom end of the base 801. Output ends of the two electric push rods 8016 extend through the base 801 to be fixedly connected to the same movable seat 802. A sliding chamber 803 and a dust suction chamber 804 are respectively opened at the top and bottom of an inner cavity of the movable seat 802. A cleaning structure and a dust suction structure are respectively disposed inside the sliding chamber 803 and the dust suction chamber 804. The electric push rod 8016 operates to push the movable seat 802 to move. The electric push rod 8016 reciprocates to drive the movable seat 802 to move back and forth in a vertical direction. The movable seat 802 moves to drive the cleaning structure to move. The cleaning structure can clean dust on the outside of the photoelectric detection device 2. The cleaning structure comprises a sliding table 805. A clamping groove 806 is opened on a side of the sliding table 805. A brush seat 807 is fittingly clamped in the clamping groove 806. The brush seat 807 is attracted in the clamping groove 806 by a rubber magnetic stripe 808 disposed on a side of the brush seat 807. A cleaning brush 809 is disposed on a side of the brush seat 807. An end of the cleaning brush 809 extends through the sliding chamber 803 to be located outside the sliding chamber 803. A threaded sleeve 8010 is fixedly disposed on a middle portion of the back side of the sliding table 805. An adjustment screw 8011 is threadedly connected inside the threaded sleeve 8010. An end of the adjustment screw 8011 extends through the movable seat 802 to be located outside the movable seat 802. The rubber magnetic stripe 808 fixes the brush seat 807 inside the sliding table 805, and can facilitate the disassembly of the brush seat 807, making it convenient to clean and replace the cleaning brush 809. When the adjustment screw 8011 is turned, the threaded sleeve 8010 threadedly connected to the adjustment screw can be driven to move. The threaded sleeve 8010 moves to push the sliding table 805 to move, and the position of the cleaning brush 809 can be adjusted, to enable the cleaning brush 809 to contact the photoelectric detection device 2. The dust suction structure comprises two suction fans 8012. The two suction fans 8012 are respectively disposed in inner walls at two sides of the movable seat 802. A dust screen 8013 is disposed at an air inlet of each suction fan 8012. An opening 8014 is opened on the top of the side of the dust suction chamber 804 away from the suction fan 8012. A drawer box 8015 is disposed inside the dust suction chamber 804 at the bottom of the suction fan 8012. An end of the drawer box 8015 extends through the dust suction chamber 804 to be located outside the dust suction chamber 804. The suction fan 8012 operates to suck the dust and foreign matter into the dust suction chamber 804 along the opening 8014, and then the dust and foreign matter fall in the drawer box 8015 to be collected. The dust screen 8013 can keep dust from entering the suction fan 8012. The drive assembly 9 comprises two movable frames 901. A sliding rod 902 is fixedly disposed on each of two sides of the movable frame 901. The two sliding rods 902 both slidably extend through the mounting seat 7 to be located outside the mounting seat 7. One of the sliding rods 902 is fixedly connected to the base 801. A connection plate 903 is slidably connected outside the sliding rod 902. An end of the connection plate 903 is fixedly connected to an inner wall of the mounting seat 7. A rack 904 is disposed on each of the top and bottom of the inner side of the movable frame 901. A runner 905 is provided between the two racks 904. A half gear 906 is disposed outside the runner 905. The half gear 906 is engaged with the racks 904. The half gear 906 rotates half a revolution to drive one rack 904 to move. In this case, the rack 904 moves to drive the movable frame 901 to move, and the movable frame 901 moves to push the base 801 to move, to move the base 801 out from the bottom of the fixing plate 6. When continuing to rotate half a revolution, the half gear 906 is engaged with the other rack 904 and drives the rack 904 to move in an opposite direction, so that the base 801 can be moved to the original position. A rotating shaft 907 is connected to the axial centers of the two runners 905. The two ends of the rotating shaft 907 are both rotatably connected to the mounting seat 7. A driven pulley 908 is disposed on a middle portion of the rotating shaft 907. The driven pulley 908 is connected with a driving pulley 9010 in a transmission way by a belt 909 disposed outside of the driven pulley 908. The driving pulley 9010 is located outside of the mounting seat 7. A drive motor 9011 for driving the driving pulley 9010 is disposed on the mounting seat 7. The drive motor 9011 operates to drive the driving pulley 9010 to rotate. The transmission of the belt 909 can simultaneously drive the driven pulley 908 to rotate. The driven pulley 908 rotates to drive the rotating shaft 907 to rotate. The rotating shaft 907 rotates to drive the two half gears 906 to simultaneously rotate.

By meas of the rotation of the screw rod 4, the sliding seat 1 can be driven to move. The movement of the sliding seat 1 can implement the adjustment of the position of the photoelectric detection device 2. The connection assembly 3 can facilitate the assembly and disassembly of the photoelectric detection device 2 and the sliding seat 1, to facilitate the maintenance of the photoelectric detection device 2. The drive assembly 9 can move a cleaning assembly 8, to avoid affecting the normal operation of the photoelectric detection device 2 when cleaning is not required. The cleaning assembly 8 can clean the outside of the photoelectric sensor on the photoelectric detection device 2, to reduce a possibility that dust accumulates to affect the normal operation of the photoelectric detection device 2.

The technologies in the prior art can be used for other technologies in this embodiment.

The present invention is described by way of preferred embodiments, and it is known to those skilled in the art that various changes or equivalent replacements may be made to these features and embodiments without departing from the spirit and scope of the present invention. The present invention is not limited by the specific embodiments disclosed herein, and other embodiments falling within the claims of this application are within the scope of protection of the present invention.

## Claims

1. A photoelectric detection mechanism with a cleaning function, comprising a sliding seat (1) and a photoelectric detection device (2), wherein the photoelectric detection device (2) being disposed on a top end of the sliding seat (1),
wherein the photoelectric detection device (2) is fixedly disposed on the top end of the sliding seat (1) by a connection assembly (3), a screw rod (4) is threadedly inserted to the sliding seat (1), a substrate (5) is rotatably disposed on each of two ends of the screw rod (4), a fixing plate (6) is disposed at a bottom of the sliding seat (1) between the two substrates (5), two ends of the fixing plate (6) are fixedly connected to the two substrates (5) respectively, a U-shaped mounting seat (7) is disposed at a bottom of the fixing plate (6), a top end of the mounting seat (7) is fixedly connected to the sliding seat (1), a cleaning assembly (8) for cleaning the photoelectric detection device (2) is disposed at a side of the mounting seat (7), and a drive assembly (9) for driving the cleaning assembly (8) is disposed inside the mounting seat (7);
the cleaning assembly (8) comprises a base (801), an electric push rod (8016) is disposed on each of two sides of a bottom end of the base (801), output ends of the two electric push rods (8016) extend through the base (801) to be fixedly connected to a movable seat (802), a sliding chamber (803) and a dust suction chamber (804) are respectively opened at a top and a bottom of an inner cavity of the movable seat (802), and a cleaning structure and a dust suction structure are respectively disposed inside the sliding chamber (803) and the dust suction chamber (804);
the drive assembly (9) comprises two movable frames (901), a sliding rod (902) is fixedly disposed on each of two sides of the movable frame (901), the two sliding rods (902) both slidably extend through the mounting seat (7) to be located outside the mounting seat (7), one of the sliding rods (902) is fixedly connected to the base (801), a connection plate (903) is slidably connected to an outside of the sliding rod (902), an end of the connection plate (903) is fixedly connected to an inner wall of the mounting seat (7), a rack (904) is disposed on each of a top and a bottom of an inner side of the movable frame (901), a runner (905) is disposed between the two racks (904), a half gear (906) is disposed outside the runner (905), and the half gear (906) is engaged with the racks (904); and
a rotating shaft (907) is connected to axial centers of the two runners (905), two ends of the rotating shaft (907) are both rotatably connected to the mounting seat (7), a driven pulley (908) is disposed on a middle portion of the rotating shaft (907), the driven pulley (908) is connected to a driving pulley (9010) in a transmission way by a belt (909) disposed outside the driven pulley (908), the driving pulley (9010) is located outside the mounting seat (7), and a drive motor (9011) for driving the driving pulley (9010) is disposed on the mounting seat (7).

2. The photoelectric detection mechanism with a cleaning function according to claim 1, wherein a sliding groove (10) is opened on a bottom end of the sliding seat (1), the sliding seat (1) is slidably disposed on a top of the fixing plate (6), a limit groove (11) is opened on each of two sides of the fixing plate (6), a limit block (12) is slidably disposed inside each of the two limit grooves (11), and the two limit blocks (12) are respectively fixed at two sides of the sliding groove (10).

3. The photoelectric detection mechanism with a cleaning function according to claim 1, wherein the connection assembly (3) comprises an inverted T-shaped limit seat (301) and an insertion post (302), the limit seat (301) is fixedly disposed at a bottom end of the photoelectric detection device (2), the limit seat (301) is fittingly limited in a seat groove (13) opened on the top end of the sliding seat (1), the insertion post (302) is fixedly disposed on a back side of the photoelectric detection device (2), an end of the insertion post (302) extends through the sliding seat (1) to be fittingly sleeved with a fixing block (303), the fixing block (303) is fixedly connected to the sliding seat (1), and insertion structures for inserting into the insertion post (302) are disposed opposite on two sides of the fixing block (303).

4. The photoelectric detection mechanism with a cleaning function according to claim 3, wherein the insertion structure comprises a movable pressing plate (304), a support spring (305) is fixedly disposed on a side of a bottom end of the movable pressing plate (304), a bottom end of the support spring (305) is fixedly connected to the fixing block (303), an insertion block (306) is disposed on an other side of the bottom end of the movable pressing plate (304), a top end of the insertion block (306) is rotatably connected to the movable pressing plate (304) by a hinge block, and a bottom end of the insertion block (306) is fittingly inserted into an insertion groove (307) opened on the insertion post (302).

5. The photoelectric detection mechanism with a cleaning function according to claim 4, wherein a slope (308) tilting downward is disposed on a side, close to the insertion post (302), of each of the two insertion block (306), a tilting chamfer (309) is disposed at an end of the insertion post (302) corresponding to the slope (308), a mounting groove is opened on the fixing block (303), a spring block (3010) is disposed in the mounting groove, the spring block (3010) is located on a side of the insertion post (302), a supporting rod (3011) is disposed on a middle portion of the bottom end of the movable pressing plate (304), a bottom end of the supporting rod (3011) is fixedly connected to the fixing block (303), and a top end of the supporting rod (3011) is rotatably connected to the movable pressing plate (304) by a hinge block.

6. The photoelectric detection mechanism with a cleaning function according to claim 1, wherein the cleaning structure comprises a sliding table (805), a clamping groove (806) is opened on a side of the sliding table (805), a brush seat (807) is fittingly clamped inside the clamping groove (806), the brush seat (807) is attracted inside the clamping groove (806) by a rubber magnetic stripe (808) disposed on a side of the brush seat (807), a cleaning brush (809) is disposed on a side of the brush seat (807), an end of the cleaning brush (809) extends through the sliding chamber (803) to be located outside the sliding chamber (803), a threaded sleeve (8010) is fixedly disposed on a middle portion of a back side of the sliding table (805), an adjustment screw (8011) is threadedly connected in the threaded sleeve (8010), and an end of the adjustment screw (8011) threadedly extends through the movable seat (802) to be located outside the movable seat (802).

7. The photoelectric detection mechanism with a cleaning function according to claim 6, wherein the dust suction structure comprises two suction fans (8012), the two suction fans (8012) are respectively disposed in inner walls at two sides of the movable seat (802), a dust screen (8013) is disposed at an air inlet of the suction fan (8012), an opening (8014) is opened on a top of a side of the dust suction chamber (804) away from the suction fan (8012), a drawer box (8015) is disposed inside the dust suction chamber (804) at a bottom of the suction fan (8012), and an end of the drawer box (8015) extends through the dust suction chamber (804) to be located outside the dust suction chamber (804).
